# EUROPEAN PATENT SPECIFICATION

(11) **EP 4 002 112 B1**
(45) Date of publication and mention of the grant of the patent: **25.09.2024**
(21) Application number: 20844411.7
(22) Date of filing: 17.07.2020
(51) Int. Cl.: G06F 9/48, G06F 9/451

(54) **DATA PROCESSING METHOD AND APPARATUS, AND ELECTRONIC DEVICE**
DATENVERARBEITUNGSVERFAHREN UND -VORRICHTUNG SOWIE ELEKTRONISCHE VORRICHTUNG
PROCÉDÉ ET APPAREIL DE TRAITEMENT DE DONNÉES ET DISPOSITIF ÉLECTRONIQUE

(30) Priority: 20.07.2019 CN 201910657906
(43) Date of publication of application: 25.05.2022
(73) Proprietor: Huawei Technologies Co., Ltd., Longgang Shenzhen, Guangdong 518129 (CN)
(72) Inventor: WANG, Liang, Shenzhen, Guangdong 518129 (CN); YU, Xianyu, Shenzhen, Guangdong 518129 (CN); LI, Yu, Shenzhen, Guangdong 518129 (CN); ZHI, Qucheng, Shenzhen, Guangdong 518129 (CN)
(74) Representative: Pfenning, Meinig & Partner mbB
(86) International application number: PCT/CN2020/102534
(87) International publication number: WO 2021/013055

(56) References cited:
- EP-B1- 2 984 564
- CN-A- 105 283 845
- CN-A- 106 354 512
- CN-A- 107 491 346
- CN-A- 109 669 752
- CN-A- 109 901 926
- CN-A- 110 502 294
- US-A1- 2013 055 276
- US-A1- 2019 180 405
- US-B1- 6 894 693
- ZHUANG, Y., YANG, SQ., RUI, Y., HE, Q.: "Advances in Multimedia Information Processing - PCM 2006, 7th Pacific Rim conference on Multimedia, Hangzhou, China, November 2006, Proceedings", vol. 4261, part Lecture Notes in Computer Science November 2006, SPRINGER VERLAG, Berlin, Heidelberg, ISBN: 978-3-540-48766-1, article MEE YOUNG SUNG ET AL: "Parallel Processing for Reducing the Bottleneck in Realtime Graphics Rendering", pages: 943 - 952, XP019047670, DOI: 10.1007/11922162_107

## Description

### TECHNICAL FIELD

This application relates to the field of electronic technologies, and in particular, to a data processing method and apparatus, and an electronic device.

### BACKGROUND

Currently, a mainstream intelligent terminal operating system is an Android (Android) system. When an application in the Android system runs in the foreground, corresponding interfaces may be refreshed and changed in various cases. Particularly, in a user operation procedure, when sliding is performed a plurality of times continuously, a typical problem is that the interfaces are changed unstably, and system smoothness is poor. In addition, FPS drops and jank sometimes occur, and therefore user experience is poor. A main reason for this is that a plurality of threads including high-load tasks need to run in the background, resulting in relatively high power consumption, and a foreground task cannot obtain a required central processing unit (central processing unit, CPU) resource in a timely manner. This increases time consumed for running a single frame and causes jank.
US 2019/180405 A1 discloses that a first thread sends a rendering request for a scalable video graphics operation using a scalable video graphics object to a second thread. The second thread processes the scalable video graphics operation to render the scalable video graphics object using a first set of parameters that is stored in a data structure. The first thread performs a computation that calculates a second set of parameters for the scalable video graphics operation and stores the second set of parameters in the data structure. The first thread sends a signal to the second thread indicating that the first set of parameters have changed to the second set of parameters to allow the second thread to synchronize and use the second set of parameters to process the scalable video graphics operation.
MEEE YOUNG SUNG ET AL: "Parallel Processing for Reducing the Bottleneck in Realtime Graphics Rendering", pages 943-953 in "Advances in Multimedia Information Processing - PCM 2006, 7th Pacific Rim conference on Multimedia. Hangzhou, Cina, November 2006, Proceedings", Lecture Notes in Computer Science, col. 4261, SPRINGER, Berlin, discloses improving the performance of parallel processing for realtime graphics rendering by separating the CPU operations into two parts: pure CPU operations and operations related to the GPU, and let them operate in parallel. This allows for maximizing the parallelism in processing the communication between the CPU and the GPU.
US 6 894 693 B1 discloses that a graphics application generates graphics data, including draw commands and instructions to load textures. The application loads draw commands into a list and associated logic for later transfer to graphics hardware. Draw commands may be associated with one or more predicate functions that prevent the commands from being transferred before the graphics hardware is ready to receive them. The application further loads textures into a texture memory or stores instructions for loading textures in a texture load list. A development environment allows such applications to be developed without requiring developers to specifically code these functionalities.
EP 2 984 564 B1 discloses that a computing device identifies a portion of a display object to pre-generate. The device may monitor a thread to identify the next upcoming window of idle time (i.e., the next opportunity when the thread will be idle for a minimum period of time). The device may add one or more selected pre-generation tasks to a message queue for execution by the thread during the window. The device may execute the one or more selected pre-generation tasks in the message queue by pre-generating at least one selected element of a display object with content for a portion of the content layout, and then return the display object.

### SUMMARY

This application provides a data processing method and apparatus, and an electronic device, to reduce load of a UI thread in some scenarios, shorten running time of the UI thread, and reduce jank, so as to improve system smoothness and improve user experience.
According to a first aspect, a data processing method is provided, where the method includes: In response to a received trigger signal, a main thread in a first period starts to process a time sequence-dependent task in one or more tasks in the first period; the main thread obtains a preprocessing result of a time sequence-independent task in the one or more tasks, where the preprocessing result is a result obtained by processing the time sequence-independent task in a second period, and the second period is a period before the first period; the main thread determines a processing result of the main thread based on a result of the time sequence-dependent task processed in the first period and the obtained preprocessing result of the time sequence-independent task; and the main thread sends the processing result of the main thread to a render thread, wherein the time sequence-independent task is a task that does not depend on a previous task and whose running result does not affect processing of a subsequent task.

In the solution provided in this application, a time sequence-independent task in a UI thread is recognized offline, where the time sequence-independent task may be a function of the time sequence-independent task, an Android API interface of the time sequence-independent task, or the like, and idle time of one frame of the UI thread or whether the UI thread is in an idle state is recognized. When average running time of the time sequence-independent task is less than or equal to the idle time of one frame, the time sequence-independent task is preprocessed by using the idle time of one frame, that is, the time sequence-independent task in the UI thread is "moved" to the idle time of one frame of the UI thread for processing, and a processing result is buffered. Alternatively, the time sequence-independent task is preprocessed by using the idle state, that is, the time sequence-independent task in the UI thread is "moved" to an idle state time period of the UI thread for processing, and a processing result is buffered. This method can reduce task load of the UI thread in some scenarios, and reduce jank, to improve system smoothness and improve user experience.

For example, when total duration of a UI thread and a render thread exceeds 16.67 ms, jank occurs in an existing system. According to the embodiments of the present invention, for example, a time sequence-independent task FunC is preprocessed. When UI thread + render thread = 18 ms, if running time of the UI thread is 10 ms, running time of the time sequence-independent task FunC is 3 ms, and running time of the render thread is 8 ms, FunC may be processed in advance by using time after the running time 10 ms of the UI thread. In this case, UI thread + render thread = 15 ms. In this way, an FPS drop does not occur, and a user experiences smooth display without jank.

With reference to the first aspect, in some implementations of the first aspect, before the main thread in the first period starts to process the time sequence-dependent task, the method further includes: processing the time sequence-independent task in the second period, to obtain the preprocessing result of the time sequence-independent task; and buffering the preprocessing result of the time sequence-independent task.

With reference to the first aspect and the foregoing implementations, in some implementations of the first aspect, when the main thread in the second period is in a running state, duration of the second period includes running duration of the main thread and idle duration of the main thread, and the method further includes: determining that running duration of the time sequence-independent task is less than or equal to the idle duration of the main thread.

In this solution, the time sequence-independent task is preprocessed, to reduce UI running time of a current frame, and reduce running load of the main thread, so as to reduce total time consumed by the UI thread and the render thread. Specifically, a processing procedure of the time sequence-independent task in the first period is moved to the idle time of one frame of the UI thread in the second period for preprocessing, and the processing result of the time sequence-independent task is buffered. When the UI thread in the first period performs processing, the buffered result of the time sequence-independent task may be directly obtained. In this way, time for the UI thread in the current first period to run the time sequence-independent task is reduced, so that total time consumed by the UI thread and the render thread that are in the current period is reduced.

With reference to the first aspect and the foregoing implementations, in some implementations of the first aspect, the main thread in the second period is in an idle state.

Specifically, if a time sequence-independent task in a period consumes quite a long time, idle time of one frame of the UI thread cannot be used, because running time of such type of time sequence-independent task may be longer than duration of one period. Time required for processing such type of function is long. Therefore, the preprocessing procedure cannot be performed by using the idle time of one frame of the UI thread. In this case, the idle state of the UI thread may be used for processing and the processing result of the time sequence-independent task of the UI thread is buffered. When the function that consumes a long time is executed, a running result in the idle state is directly obtained, to reduce the running time of the function.

With reference to the first aspect and the foregoing implementations, in some implementations of the first aspect, the method further includes: determining idle duration of the main thread in a third period, where the main thread in the third period is in a running state, and duration of the third period includes running duration of the main thread and the idle duration of the main thread; and when running duration of the time sequence-independent task is greater than the idle duration of the main thread in the third period, processing the time sequence-independent task in the second period, to obtain the preprocessing result of the time sequence-independent task.

It should be understood that a system may determine whether a preprocessing procedure for processing the time sequence-independent task is moved to idle duration or an idle state of the UI thread. For example, the system may preferentially determine whether the running duration of the time sequence-independent task is less than or equal to the idle duration of the main thread. When the running duration of the time sequence-independent task is less than or equal to the idle duration of the UI thread, a time sequence-independent task in one or more subsequent periods is moved to the idle duration of the UI thread in the current period for processing. When the running duration of the time sequence-independent task is greater than the idle duration of the UI thread, a time sequence-independent task in one or more subsequent periods is moved to the idle state of the current UI thread for processing. Alternatively, when determining that there is currently an idle state of the UI thread, the system may move a time sequence-independent task in one or more subsequent periods to the idle state of the current UI thread for processing. This is not limited in this application.

With reference to the first aspect and the foregoing implementations, in some implementations of the first aspect, that the main thread in the first period starts to process the time sequence-dependent task in the one or more tasks in the first period in response to the received trigger signal includes: in response to the received trigger signal, stopping a preprocessing procedure of the main thread in the first period, and starting to process the time sequence-dependent task in the one or more tasks in the first period.

According to a second aspect, a data processing apparatus is provided, where the apparatus includes: a processing unit, configured to start, in a first period in response to a received trigger signal, to process a time sequence-dependent task in one or more tasks in the first period; an obtaining unit, configured to obtain a preprocessing result of a time sequence-independent task in the one or more tasks, where the preprocessing result is a result obtained by processing the time sequence-independent task in a second period, and the second period is a period before the first period, where the processing unit is further configured to determine a processing result of the main thread based on a result of the time sequence-dependent task processed in the first period and the obtained preprocessing result of the time sequence-independent task; and a sending unit, configured to send the processing result of the main thread to a render thread, wherein the time sequence-independent task is a task that does not depend on a previous task and whose running result does not affect processing of a subsequent task.

With reference to the second aspect, in some implementations of the second aspect, before the processing unit starts to process the time sequence-dependent task, the processing unit is further configured to process the time sequence-independent task in the second period, to obtain the preprocessing result of the time sequence-independent task. The apparatus further includes: a buffering unit, configured to buffer the preprocessing result of the time sequence-independent task.

With reference to the second aspect and the foregoing implementations, in some implementations of the second aspect, when the main thread in the second period is in a running state, duration of the second period includes running duration of the main thread and idle duration of the main thread, and the processing unit is further configured to determine that running duration of the time sequence-independent task is less than or equal to the idle duration of the main thread.

With reference to the second aspect and the foregoing implementations, in some implementations of the second aspect, the main thread in the second period is in an idle state.

With reference to the second aspect and the foregoing implementations, in some implementations of the second aspect, the processing unit is further configured to: determine idle duration of the main thread in a third period, where the main thread in the third period is in a running state, and duration of the third period includes running duration of the main thread and idle duration of the main thread; and when running duration of the time sequence-independent task is greater than the idle duration of the main thread in the third period, process the time sequence-independent task in the second period, to obtain the preprocessing result of the time sequence-independent task.

With reference to the second aspect and the foregoing implementations, in some implementations of the second aspect, the processing unit is specifically configured to: in response to the received trigger signal, stop a preprocessing procedure in the first period, and start to process the time sequence-dependent task in the one or more tasks in the first period.

According to a third aspect, this application provides an apparatus. The apparatus is included in an electronic apparatus, and the apparatus has a function of implementing behavior of the electronic apparatus in the foregoing aspects and the possible implementations of the foregoing aspects. The function may be implemented by hardware, or may be implemented by hardware executing corresponding software. The hardware or the software includes one or more modules or units corresponding to the foregoing function, for example, a display module or unit, a detection module or unit, or a processing module or unit.

According to a fourth aspect, this application provides an electronic apparatus, including a touchscreen, where the touchscreen includes a touch-sensitive surface and a display; a camera; one or more processors; a memory; a plurality of applications; and one or more computer programs. The one or more computer programs are stored in the memory, and the one or more computer programs include instructions. When the instructions are executed by the electronic apparatus, the electronic apparatus is enabled to perform the data processing method according to any one of the foregoing aspects related to the data processing method.

According to a fifth aspect, this application provides an electronic apparatus, including one or more processors and one or more memories. The one or more memories are coupled to the one or more processors. The one or more memories are configured to store computer program code, and the computer program code includes computer instructions. When the one or more processors execute the computer instructions, the electronic apparatus is enabled to perform the data processing method according to any one of the foregoing aspects related to the data processing method.

According to a sixth aspect, this application provides a computer storage medium, including computer instructions. When the computer instructions are run on an electronic apparatus, the electronic apparatus is enabled to perform the data processing method according to any one of the foregoing aspects related to the data processing method.

According to a seventh aspect, this application provides a computer program product. When the computer program product runs on an electronic apparatus, the electronic apparatus is enabled to perform the data processing method according to any possible implementation of any one of the foregoing aspects.

According to an eighth aspect, an electronic apparatus is provided, where the electronic apparatus includes an apparatus for performing the data processing method according to any one of the foregoing aspects related to the data processing method.

### BRIEF DESCRIPTION OF DRAWINGS

FIG. 1 is a schematic diagram of a display procedure of a graphical user interface according to this application;
FIG. 2 is a diagram of another display procedure of a graphical user interface according to this application;
FIG. 3 is a flowchart of a data processing method according to an embodiment of this application;
FIG. 4 is a schematic diagram of a processing procedure of a UI thread according to an embodiment of this application;
FIG. 5 is a schematic diagram of another processing procedure of a UI thread according to an embodiment of this application;
FIG. 6 is a schematic diagram of a smoothness test result according to an embodiment of this application;
FIG. 7 is a schematic diagram of a data processing apparatus according to an embodiment of this application; and
FIG. 8 is a schematic diagram of composition of an electronic apparatus according to an embodiment of this application.

### DESCRIPTION OF EMBODIMENTS

The following describes the technical solutions in the embodiments of this application with reference to the accompanying drawings in the embodiments of this application.

In the descriptions of the embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of the embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features, for example, "first period", "second period", and "third period" in this application. In addition, in the descriptions of the embodiments, unless otherwise stated, "a plurality of" means two or more. For example, a plurality of tasks may refer to two or more tasks.

A method provided in an embodiment of this application may be applied to an electronic apparatus. In some embodiments, the electronic apparatus may be, for example, a portable electronic apparatus further including another function, such as a mobile phone, a tablet computer, or a wearable electronic apparatus (such as a smartwatch) with a wireless communication function. An example embodiment of the portable electronic apparatus includes but is not limited to a portable electronic apparatus using iOS^{®}, Android^{®}, Microsoft^{®}, or another operating system. The portable electronic apparatus may alternatively be another portable electronic apparatus, such as a laptop (laptop). It should be further understood that, in some other embodiments, the foregoing electronic apparatus may alternatively be not a portable electronic apparatus but a desktop computer. In some embodiments, the electronic apparatus may be a smart home appliance, such as a smart speaker or a smart home device. A specific type of the electronic apparatus is not limited in the embodiments of this application.

A plurality of third-party applications (application, App) may be installed on an existing electronic apparatus, for example, a plurality of applications such as Alipay, Album, WeChat, Cards, Settings, and Camera on a mobile phone. Each application may present a different graphical user interface (graphical user interface, GUI) on the electronic apparatus according to a user operation.

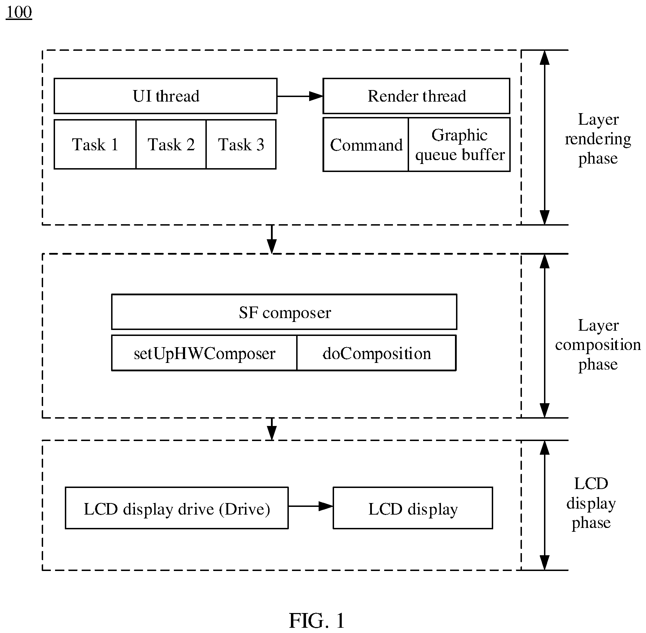

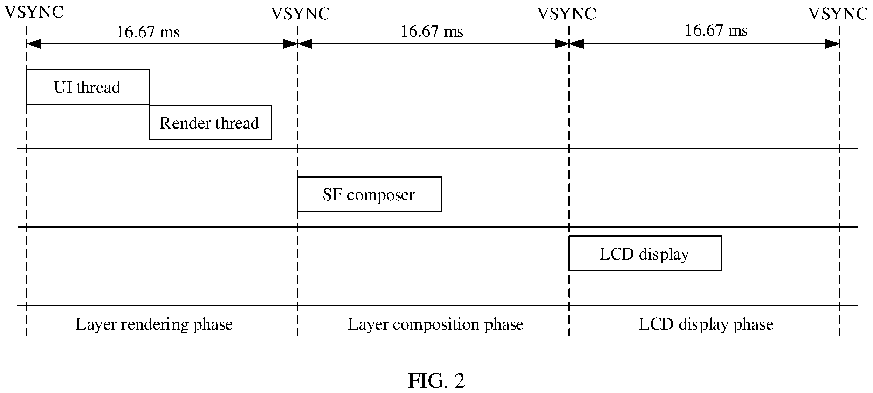

FIG. 1 is a schematic diagram of a display procedure of a graphical user interface according to this application, and FIG. 2 is a diagram of another display procedure of a graphical user interface according to this application. An electronic apparatus based on an Android (Android) system is used as an example. When an application is started, the electronic apparatus creates a thread of an Android user interface (Android user interface, UI). With reference to FIG. 1 and FIG. 2, a procedure in which the system displays the graphical user interface may be divided into three phases.

### Phase 1: layer rendering phase

In the layer rendering phase, the UI may be drawn into a graphic queue buffer (Queue buffer). Specifically, the layer rendering phase may include a main thread (main thread) and a render thread (renderer thread), where the main thread is also referred to as a UI thread (UI thread). The main thread and the render thread are dependent threads. It should be understood that the system does not create a separate thread for each component, all UI components in a same process are instantiated in the UI thread, and calling made by the system to each component is distributed from the UI thread.

As shown in FIG. 1, the UI thread may include a plurality of processing tasks, for example, member functions such as Measure, Draw, and Layout. When task processing of the LTI thread ends, a DrawFrame command is sent to the render thread. The render thread contains a task queue (Task Queue) inside. The DrawFrame command sent from the UI thread is stored in the task queue of the render thread and waits to be processed by the render thread. Function types, tasks, and the like included in the UI thread and the render thread are not described herein.

It should be understood that a task processing result of the UI thread needs to be sent to the render thread. Optionally, the DrawFrame command sent by the UI thread to the render thread may be generated based on the task processing result of the UI thread. In other words, the task processing result of the UI thread may be sent to the render thread by using the DrawFrame command. This is not limited in this application.

As shown in FIG. 2, the system may periodically generate a trigger signal, for example, a VSYNC signal shown in FIG. 2. The VSYNC signal is a trigger signal of each phase. In other words, the VSYNC signal may be equivalently understood as a timer function. Duration between two adjacent VSYNC signals is a frame length of one frame of a procedure of displaying a graphical user interface. As shown in FIG. 2, when the first VSYNC signal triggers the system to start to enter the layer rendering phase in the first period, the UI thread and the render (renderer) thread are sequentially executed.

For example, a 60 Hz display system is used as an example in this application. For the 60 Hz display system, a VSYNC signal period is 16.67 ms. FIG. 2 shows a display procedure of three consecutive periods. Generally, if response time of each phase is within 16.67 ms, the system is considered smooth without an FPS drop or jank.

### Phase 2: layer composition phase

The layer composition phase is mainly performed in a SurfaceFlinger (SurfaceFlinger, SF), and layers in a previous phase are composed based on a result of the graphic queue buffer in the layer rendering phase.

For example, as shown in FIG. 2, after running of the UI thread and the render thread in the layer rendering phase ends, a running result is drawn into the graphic queue buffer (Queue buffer), and the second VSYNC signal triggers the system to enter the second period. In the layer composition phase in this period, the layers in the previous phase are directly composed based on the result of the graphic queue buffer in the previous phase.

### Phase 3: display phase

A liquid crystal display (liquid crystal display, LCD) displays composed data. For example, as shown in FIG. 2, when the third VSYNC signal triggers the system to enter the third period, a layer composed in the second period is displayed in the LCD display phase in the third period.

It should be understood that the three different phases described above are in a parallel running state in a same period. In other words, each period includes a layer rendering phase, a layer composition phase, and a display phase, and the three phases are run in parallel. In the layer composition phase, a result of a graphic queue buffer in a previous period is composed, and in the display phase, data composed in a layer composition phase in a previous period is displayed. Therefore, the three different processing phases in the three periods shown in FIG. 2 are for a task processing procedure started by a same application.

With development of intelligent terminals, users have higher requirements on experience of humancomputer interaction and system smoothness, and system smoothness during use of an electronic apparatus such as an intelligent terminal attracts more attention. Various media evaluations and releases of intelligent terminal devices advertise system smoothness to guide consumption of the users.

System smoothness means that processing time of each frame does not exceed frequency time specified by the system. With reference to the 60 Hz display system listed above, in the procedure of displaying the graphical user interface, system smoothness may mean that single-frame processing time does not exceed 16.67 ms. For a layer rendering phase that includes a UI thread and a render thread, if single-frame processing time exceeds specified time, for example, 16.67 ms, the system experiences an FPS drop or jank, affecting system smoothness. Consequently, user experience is poor.

It should be understood that one of main reasons for poor system smoothness caused when single-frame processing time exceeds 16.67 ms is that system load or a task run by the system in specific time is too heavy. As a result, the system cannot finish processing the task within the specified time of 16.67 ms, causing jank. For example, for the layer rendering phase that includes the UI thread and the render thread, if a task run by the UI thread is too large, time consumption of the UI thread and the render thread is affected, causing jank.

To improve system smoothness, electronic apparatus vendors usually increase a scheduling priority of a central processing unit (central processing unit, CPU) or a graphics processing unit (graphic processing units, GPU). Specifically, when a user starts an application, a plurality of threads need to be run by the CPU, and the UI thread is one of the plurality of threads. Running of the plurality of threads occupies a CPU resource. The CPU resource may include a big core and a little core of the CPU that are used to run a thread, a CPU frequency of a core in which the thread is located, and the like. The big core of the CPU has a high processing capability and high power consumption. The little core has a weak processing capability and low power consumption. To improve system smoothness, different scheduling priorities are set for different UI threads. For example, the UI thread (main thread) is run on the big core of the CPU. This can alleviate jank to some extent, but increases power consumption of the CPU.

In another possible implementation, single-frame running efficiency is improved by increasing a frequency. In other words, a processing speed of the CPU is improved. For example, within a specific range, a running speed of the CPU is increased from 300M to 800M. However, in this procedure, the frequency does not need to be increased for all user operations. For a light-load thread, increasing the frequency causes extra power consumption of the CPU.

In addition, in another possible implementation, a processing speed of the system is further improved by adding an asynchronous thread, that is, by adding an extra thread (such as a V thread), so that the system can process a plurality of threads in parallel. However, this method cannot work in a thread detection procedure and even causes a system crash. For example, in the Android system, it is specified that some tasks can be processed by only the main thread. If it is detected, in the thread detection procedure, that these tasks are not processed by the main thread, the application crashes.

In conclusion, regardless of reducing the UI thread and the render thread by increasing a CPU or GPU frequency or by adjusting the scheduling priority, extra power consumption is caused. In addition, the above solutions require that the UI thread and the render thread finish task processing within the single-frame processing time (for example, the single-frame processing time is 16.67 ms), to avoid an FPS drop. If the processing time of the UI thread and the render thread exceeds the single-frame processing time, an FPS drop occurs. Therefore, a method is required to improve system smoothness, reduce jank, and improve user experience.

It should be understood that the UI thread described in FIG. 1 and FIG. 2 may include a plurality of processing tasks and functions, such as a load function. If a quantity of load functions is too large, or the tasks are too heavy, the system may fail to finish task processing within specified time, causing jank. To improve system smoothness, this application provides a data processing method, to improve system smoothness by reducing processing time of a UI thread, so as to avoid jank and improve user experience.

According to the foregoing related descriptions, a UI thread includes a plurality of processing tasks, and the tasks include a time sequence-independent task and a time sequence-dependent task. Specifically, the time sequence-independent task is understood as a task that does not depend on a previous task and whose running result does not affect processing of a subsequent task. For example, a UI thread includes a plurality of tasks: a task A, a task B, a task C, a task D, and a task E, that are executed in sequence, where the task C is defined as a time sequence-independent task, and the task A, the task B, the task D, and the task E are defined as time sequence-dependent tasks. In this case, the task C may not depend on finishing of running of the task A and the task B, but the other tasks need to depend on finishing of running of a previous task. For example, the task B can be run only after running of the task A is finished, and the task D can be run only after running of the task C is finished. The task C is the time sequence-independent task and is a necessary processing task of the current UI thread. A main thread in a period may include a plurality of time sequence-independent tasks. The following describes a data processing method provided in this application by using a single time sequence-independent task as an example. A processing principle of a plurality of time sequence-independent tasks is the same as that of the single time sequence-independent task, and details are not described in this application.

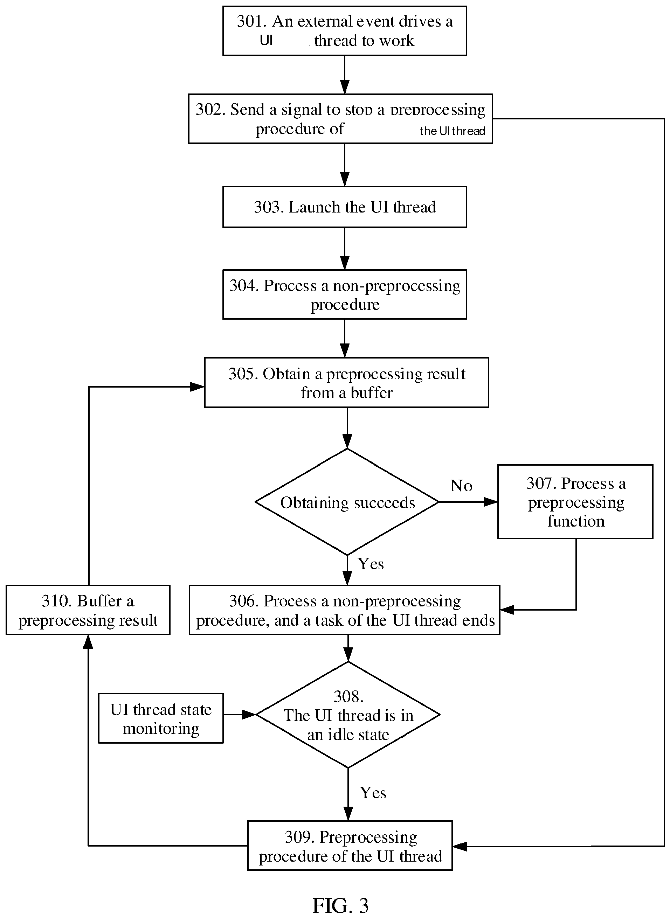

FIG. 3 is a flowchart of a data processing method according to an embodiment of this application. An electronic apparatus based on a 60 Hz Android system is used as an example. As shown in FIG. 3, the method may include the following content.

301. An external event triggers a UI thread to work. It should be understood that the external event herein may be a user operation event, or may be an event that is set in advance. This is not limited in this application.

302. Send a signal to stop a preprocessing procedure of the UI thread.

303. Launch the UI thread. In other words, the UI thread starts to run.

304. The UI thread processes a non-preprocessing task based on an original system procedure.

It should be understood that the UI thread may include a preprocessing procedure and a non-preprocessing procedure. The preprocessing procedure may be understood as a processing procedure of a time sequence-independent task, and the non-preprocessing procedure may be understood as a necessary time sequence-dependent task processing procedure of the current UI thread. For example, as mentioned above, the UI thread includes the task A, the task B, the task C, the task D, and the task E. A processing procedure of the task C is referred to as a preprocessing procedure, and processing procedures of the task A, the task B, the task D, and the task E are referred to as non-preprocessing procedures.

Specifically, the external event may trigger a system to send a VSYNC signal, and the VSYNC signal triggers the UI thread in a period to start task processing, which is referred to as a UI thread in a first period. In other words, the UI thread in the first period in this application may be understood as "a currently running UI thread". When a VSYNC signal is received, if the preprocessing procedure of the UI thread is running, the preprocessing procedure of the current UI thread is stopped, step 303 is performed, and the UI thread starts to work. If the preprocessing procedure is not currently running, when a VSYNC signal is received, step 303 is directly performed, a new UI thread directly starts to run, and the UI thread processes a non-preprocessing task.

In a possible implementation, when the UI thread in the first period runs, a preprocessing result of a current time sequence-independent task may be obtained, where the preprocessing result is a result obtained by processing the time sequence-independent task in a second period, and the second period is a period before the first period.

For example, the task C may be a time sequence-independent task in the current first period, the task C is processed in the second period, and a processing result is buffered, where the second period is a period before the first period. In other words, the task C is preprocessed in the second period before the current first period, and the preprocessing result of the task C is buffered.

In another possible implementation, when time for finishing processing the UI thread in a layer rendering phase is within specified time (for example, 16.67 ms) consumed by a single frame, and idle time of one frame is sufficient to continue to finish processing a time sequence-independent task in one or more periods after the current first period, the system may process, in the current first period, the time sequence-independent task in the one or more periods after the first period, and buffer a processing result of the time sequence-independent task. The first period and the one or more periods after the first period may be a plurality of periods formed by using consecutive VSYNC signals. A quantity of time sequence-independent tasks preprocessed in the first period is not limited in this application.

305. The UI thread obtains a preprocessing result from a buffer in a processing procedure.

For example, when the UI thread in the first period includes the plurality of tasks: the task A, the task B, the task C, the task D, and the task E, the processing procedure of the task C is a preprocessing procedure, and processing procedures of the task A, the task B, the task D, and the task E of the current UI thread are non-preprocessing procedures. The processing result of the task C has been buffered through processing in a previous period (for example, the second period). When the UI thread in the current first period is run, for example, after running of the task A and the task B is finished, the system may directly obtain the processing result of the preprocessed task C from the buffer; or after running of the task A, the task B, the task D, and the task E is finished, the system may directly obtain the processing result of the preprocessed task C from the buffer. This is not limited in this application.

306. If the preprocessing result is successfully obtained from the buffer, process a non-preprocessing procedure, and the task of the UI thread ends.

Specifically, in a procedure of running the UI thread in the current period, the system directly obtains the processing result of the preprocessed task C from the buffer after finishing running the task A and the task B, and continues to run the task D and the task E after finishing obtaining the processing result of the task C, until the task of the UI thread ends.

Alternatively, in a procedure of running the UI thread in the current period, the system directly obtains the processing result of the preprocessed task C from the buffer after finishing running the task A, the task B, the task D, and the task E, and the task of the UI thread ends after the processing result of the task C is obtained.

307. If the preprocessing result fails to be obtained from the buffer, process an original preprocessing task.

It should be understood that, after a UI thread in a previous period (the second period) is processed, if remaining time or idle time in the period is insufficient for the system to process a time sequence-independent task (for example, the task C) in a subsequent period (the current first period), a preprocessing procedure of the time sequence-independent task is not performed, and the system cannot obtain the processing result of the current time sequence-independent task C in the current first period. In this case, the system may continue to process the original task C until running of the UI thread ends. In this application, remaining time existing after a UI thread is processed in a period is referred to as "idle time of one frame" or "idle duration of one frame".

By step 306, running of the UI thread ends, and a render thread may be entered.

It should be understood that, to obtain the preprocessing result from the buffer, the time sequence-independent task needs to be processed in advance, and a procedure is as follows:
308. The system determines, through UI thread state monitoring, whether the UI thread is in an idle state.
309. When the UI thread is in an idle state, perform a preprocessing procedure of the UI thread.
310. Buffer a preprocessing result.

Specifically, the idle state of the UI thread may be understood as that the UI thread has sufficient or abundant idle time of one frame. To be specific, there is remaining time after running of the UI thread ends in a period. Alternatively, the idle state of the UI thread may be understood as that the UI thread enters the idle state.

In addition, when the UI thread is not in an idle state, the system continues to run the UI thread, does not perform a preprocessing procedure, and enters the render thread after finishing running the UI thread. This is not limited in this application.

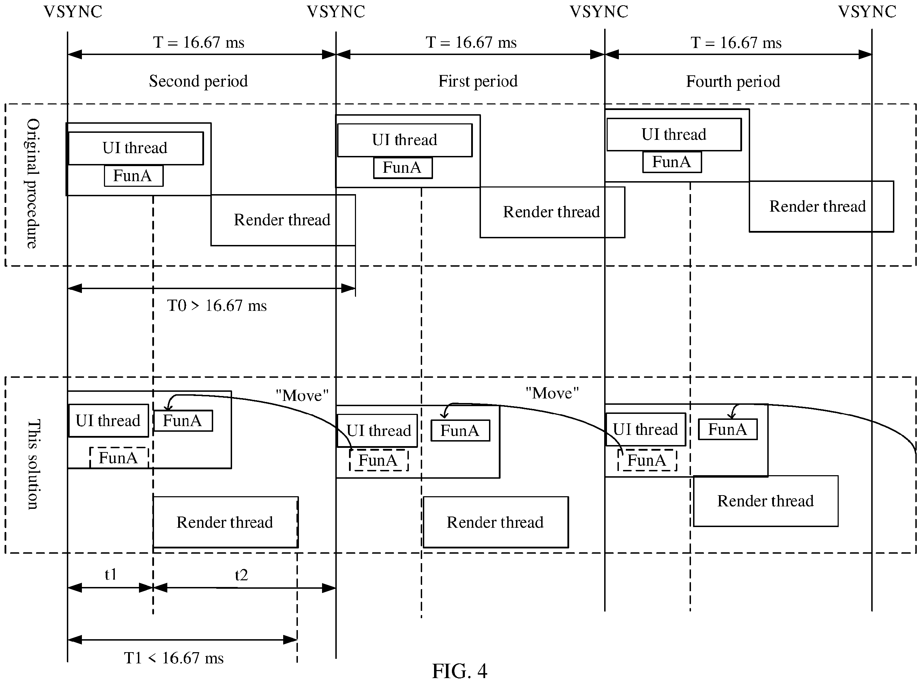

FIG. 4 is a schematic diagram of a processing procedure of a UI thread according to an embodiment of this application. As shown in FIG. 4, in each of three different periods, a UI thread procedure and a render thread procedure in a layer rendering phase are shown. In an original procedure, each period may include a UI thread and a render thread. Duration T of each period between two adjacent VSYNC signals is equal to 16.67 ms, and one period is a one-frame processing process. In other words, the UI thread plus the render thread is a one-frame processing process. When total time of the UI thread and the render thread exceeds 16.67 ms, the current frame experiences an FPS drop, causing jank to a user.

A system may determine, through offline analysis, a time sequence-independent task that is independent of a time sequence and that is in the UI thread, for example, a function FunA shown in FIG. 4. It should be understood that the time sequence-independent task may be a function, an API interface, or the like. A time sequence-independent task is used as an example herein. Processing of a time sequence-independent API interface is the same as that of the time sequence-independent task. Details are not described again. According to the foregoing related descriptions, the function FunA is equivalent to the time sequence-independent task C listed above. A processing procedure of the function FunA is used as a preprocessing procedure of the UI thread, so that the function FunA can be processed in another time period without affecting processing of another task of the current UI thread. To improve system smoothness, in this solution, the time sequence-independent task is preprocessed, to reduce UI running time of a current frame, and reduce running load of a main thread, so as to reduce total time consumed by the UI thread and the render thread.

In a possible implementation, a time sequence-independent task of a UI thread in a first period is moved to idle time of one frame of a UI thread in a second period for processing, and a processing result of the time sequence-independent task of the UI thread is buffered. The second period is a period or several periods before the first period. This is not limited in this application.

Specifically, a processing procedure of the time sequence-independent task FunA in the first period is moved to the idle time of one frame of the UI thread in the second period for preprocessing, and a processing result of FunA is buffered. When the UI thread in the first period performs processing, the buffered result of FunA may be directly obtained. In this way, time for the UI thread in the current first period to run FunA is reduced, so that total time consumed by the UI thread and a render thread that are in the current period is reduced.

For example, as shown in FIG. 4, in the original procedure, total time consumed by the UI thread and the render thread is T0, and T0 is greater than 16.67 ms. However, in the processing procedure of this solution, time for the UI thread to run FunA is reduced, and running time of the UI thread is shortened to t1 (including time for processing a non-preprocessing procedure and time for calculation based on the obtained preprocessing result). Total time T1 is equal to t1 plus running time of the render thread, and T1 is less than 16.67 ms.

In addition, idle time t2 of one frame of the UI thread is equal to T - t1, and if the system determines that time consumed for processing the time sequence-independent task FunA in the first period is less than or equal to t2, the system may move the time sequence-independent task FunA in the first period to the second period for processing, and buffer a running result of FunA.

Alternatively, if the system determines that time consumed for processing the time sequence-independent task FunA in the first period is less than or equal to T - T1, the system may move the time sequence-independent task FunA in the first period to the second period for processing, and buffer a running result of FunA. It should be understood that a manner of determining the idle time of one frame of the UI thread is not limited in this application.

According to the embodiment of the present invention, the running time of the LJI thread can be shortened, and the total time consumed by the UI thread and the render thread can be further reduced, so that system smoothness can be improved. In addition, the procedure does not affect interface display of an electronic apparatus.

Optionally, when the system determines that the time consumed for processing the time sequence-independent task FunA in the first period is less than or equal to t2, and the time sequence-independent task FunA in the first period is moved to the second period for processing, the time sequence-independent task FunA may be processed in parallel with the render thread. In other words, the electronic apparatus may simultaneously run a time sequence-independent task FunA of a subsequent period in a render thread time period. Alternatively, after running of the render thread in the second period ends, the time sequence-independent task FunA in the subsequent first period is run. This is not limited in this application.

Optionally, when determining that total time consumed for processing the time sequence-independent task FunA in the first period and a time sequence-independent task FunA in a fourth period is less than or equal to t2, the system moves both the time sequence-independent task FunA in the first period and the time sequence-independent task FunA in the fourth period to the second period for processing, and buffers running results of FunA. A quantity of time sequence-independent tasks FunA that are processed in a current frame or a quantity of time sequence-independent tasks in a plurality of periods is not limited in this application.

According to the method described in FIG. 4, when a main thread in the second period that preprocesses time sequence-independent task is in a running state, duration of the second period includes running duration of the main thread and idle duration of the main thread. When determining that running duration of the time sequence-independent task is less than or equal to the idle duration of the main thread, the system may move a time sequence-independent task in one or more periods after the second period to the second period for processing.

In another possible implementation, the main thread in the second period that preprocesses the time sequence-independent task may be in an idle state. In other words, a time sequence-independent task in one or more periods after the second period may be moved to a time period in which the UI thread is in an idle state for processing, and a processing result of the time sequence-independent task of the UI thread is buffered.

Specifically, if a time sequence-independent task in a period consumes quite a long time, idle time of one frame of the UI thread cannot be used, because running time of such type of time sequence-independent task may be longer than duration of one period. Such type of function whose processing duration is longer than duration of one period is referred to as FunB. Specifically, for example, FunB may include a function obtainview a function inflate, or the like. Processing of such type of function requires a long time, and the preprocessing procedure cannot be performed by using the idle time of one frame of the UI thread. In this case, the idle state of the UI thread may be used to perform processing, and a processing result of a time sequence-independent task of the UI thread is buffered.

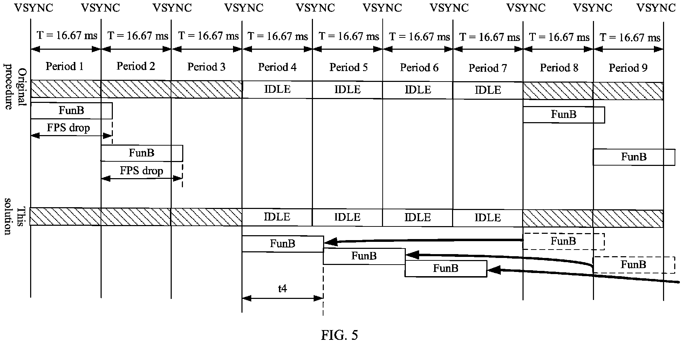

FIG. 5 is a schematic diagram of another processing procedure of a UI thread according to an embodiment of this application. As shown in FIG. 5, in nine different periods, a shaded part is a period in which a system has a processing process, each period includes the foregoing described UI thread, render thread, and the like, and the UI thread is in a running state. A blank part shows an idle (IDLE) state in which the system does not have a processing process. That is, the UI thread is in an idle state. Duration T of each period between two adjacent VSYNC signals is equal to 16.67 ms, and one period is a one-frame processing process.

For example, in FIG. 5, processing duration t4 of a function FunB shown in an original procedure is greater than specified duration T = 16.67 ms of one period, and idle time of one frame of a UI thread in each period cannot be used. In this case, an idle state of the UI thread may be used. To be specific, time-consuming functions FunB after a period 8 are moved to an idle state in blank periods from a period 4 to a period 7, the functions FunB are preprocessed in sequence, and a running result is buffered. It should be understood that the system may determine, based on total duration of the idle state, a specific quantity of periods including functions FunB that can be run for processing. This is not limited in this application.

When there is a scheduled operation or a user operation that conforms to a prediction in the period 8, and a VSYNC signal triggers the UI thread to restart working, a running result in the idle state is directly obtained when the time-consuming function is performed, to reduce the running time of the time-consuming function.

It should be understood that the system may determine whether a preprocessing procedure for processing the time sequence-independent task is moved to idle duration or an idle state of the UI thread. For example, the system may preferentially determine whether the running duration of the time sequence-independent task is less than or equal to the idle duration of the main thread. When the running duration of the time sequence-independent task is less than or equal to the idle duration of the UI thread, a time sequence-independent task in one or more subsequent periods is moved to the idle duration of the UI thread in the current period for processing. When the running duration of the time sequence-independent task is greater than the idle duration of the UI thread, a time sequence-independent task in one or more subsequent periods is moved to the idle state of the current UI thread for processing. Alternatively, when determining that there is currently an idle state of the UI thread, the system may move a time sequence-independent task in one or more subsequent periods to the idle state of the current UI thread for processing. This is not limited in this application.

According to the foregoing data processing method, total time consumed by the UI thread and the render thread is shortened, and system smoothness can be improved. In addition, an FPS drop can be avoided in this procedure, and the interface display of the electronic apparatus is not affected.

With reference to FIG. 4 and FIG. 5, the foregoing describes two procedures of shortening total time consumed by the UI thread and the render thread to improve system smoothness. The system monitors a state of the UI thread, recognizes a time sequence-independent task, estimates running time consumption of the time sequence-independent task, and then determines a processing principle of the time sequence-independent task, for example, determines the processing procedure in FIG. 4 or FIG. 5, to process the time sequence-independent task. Specifically, in this procedure, using a time sequence-independent task as an example, the following procedure may be included (processing of a time sequence-independent API interface is the same as that of the time sequence-independent task, and details are not described herein).

### 1. Monitor a state of a UI thread

Corresponding to step 308 in FIG. 3, a system monitors the state of the UI thread. Specifically, two pieces of information are mainly monitored: idle time of one frame of the UI thread or whether the UI thread is in an idle state.

The idle time of one frame of the UI thread may be obtained by obtaining running time of the UI thread.

In a possible implementation, in a procedure of determining the idle time of one frame of the UI thread, as shown in FIG. 4, the idle time of one frame of the UI thread is equal to total single-frame time (the total single-frame time T = 16.67 ms) minus the running time of the UI thread. That is, t2 = T - t1.

In addition, the system further monitors whether the UI thread is in the idle state. Specifically, whether the UI thread is in the idle state may be determined by monitoring the state of the thread. Specifically, a manner in which the system obtains and determines a state of the UI thread is not limited in this application.

### 2. Time consumption estimation of the time sequence-independent task

Corresponding to step 309 in FIG. 3, because a current frame needs to be used to preprocess a time sequence-independent task of a next frame, time for executing the time sequence-independent task in the current frame needs to be estimated, so as to estimate whether the time sequence-independent task can be processed in the idle time t2 of one frame of the UI thread.

For example, for a function FunA consuming relatively short time, the system estimates that running time consumption is t3. When t3 is less than or equal to the idle time t2 of one frame, the data processing method described in FIG. 4 may be used to perform a preprocessing procedure by using the idle time of one frame of the UI thread. Alternatively, for a time-consuming function FunB or the like, the system estimates that running time consumption is t4. When t4 is greater than the idle time t2 of one frame, the data processing method described in FIG. 5 may be used to perform a preprocessing procedure by using the idle state. Herein, t3 and t4 may be preset in the system, or may be obtained from another device/a network side. If the system cannot obtain t3 and t4 or fails to obtain t3 and t4, the system may further determine t3 and t4 with reference to time consumption of a similar function based on a parameter of the function, such as a type and calculation complexity.

It should be understood that the system may estimate time for processing the time sequence-independent task. In a system estimation procedure, to improve estimation accuracy, optionally, running time of the time sequence-independent task in a period of time may be collected, and average running time and actual fluctuation of the time sequence-independent task are recorded. For example, a 3δ principle may be used, so that estimated average running time of the time sequence-independent task can meet 99.98% cases, and then estimation accuracy is improved. The foregoing 1 and 2 may occur sequentially, or may be performed simultaneously. The state of the UI thread may be continuously monitored, and estimated time for processing the time sequence-independent task is obtained only once.

### 3. Policy for processing the time sequence-independent task

The system determines, by monitoring the state of the UI thread, the idle time t2 of one frame of the current frame, or whether the UI thread is in the idle state. In addition, the system obtains the running time of the time sequence-independent task and determines, based on the above information, the policy for processing the time sequence-independent task.

If fluctuation of the time sequence-independent task is slight and average running time of the time sequence-independent task is less than or equal to the idle time of one frame, the time sequence-independent task is preprocessed by using the idle time t2 of one frame. To be specific, a time sequence-independent task in a subsequent period is moved to a current frame for processing based on the processing procedure of this solution in FIG. 4, and a processing result is buffered.

If fluctuation of the time sequence-independent task is great and average running time of the time sequence-independent task is greater than the idle time t2 of one frame, a time sequence-independent task in a subsequent period is not processed.

If fluctuation of the time sequence-independent task is great and average running time of the time sequence-independent task is greater than the idle time t2 of one frame, the system determines whether the UI thread in the current frame is in the idle state, and preprocesses the time sequence-independent task by using the idle state. To be specific, a time sequence-independent task is moved to the idle state for preprocessing based on the processing procedure of this solution in FIG. 5, and a processing result is buffered.

### 4. How to process the time sequence-independent task

When a condition for processing the time sequence-independent task is met, the time sequence-independent task starts to be processed. "Start to be processed" herein means that the time sequence-independent task is directly processed in parallel with a render thread after running of the current UI thread is finished. Alternatively, the time sequence-independent task starts to be processed after the idle state is entered.

The foregoing is a procedure that the system recognizes and processes the time sequence-independent task. After the time sequence-independent task is processed, the system can enter the render thread; or the time sequence-independent task and the render thread are processed simultaneously, and a preprocessing result is buffered. This is not limited in this application.

It should be understood that, if the UI thread has abundant idle time of one frame or enters the idle state, the preprocessing procedure is started and the preprocessing result is buffered. When the buffering is finished, or a signal interrupts the preprocessing procedure, running ends, and a new UI thread is started. Alternatively, when the system determines, through UI thread state monitoring, that the UI thread is not in the idle state, the system does not run the preprocessing procedure of the UI thread.

In conclusion, after running of the UI thread ends, operations in step 305 to step 311 may be cyclically performed in a next-frame running procedure, and a preprocessing function result is obtained from the buffer. A render thread is entered when running of a UI thread ends.

In the foregoing solution, the time sequence-independent task in the UI thread is recognized offline, where the time sequence-independent task may be a function of the time sequence-independent task, an Android API interface of the time sequence-independent task, or the like, and the idle time of one frame of the UI thread or whether the UI thread is in the idle state is recognized. When average running time of the time sequence-independent task is less than or equal to the idle time of one frame, the time sequence-independent task is preprocessed by using the idle time of one frame, that is, the time sequence-independent task in the UI thread is "moved" to the idle time of one frame of the LTI thread for processing, and a processing result is buffered. Alternatively, the time sequence-independent task is preprocessed by using the idle state, that is, the time sequence-independent task in the UI thread is "moved" to an idle state time period of the UI thread for processing, and a processing result is buffered. This method can reduce task load of the UI thread in some scenarios, and reduce jank, to improve system smoothness and improve user experience. For example, when total duration of a UI thread and a render thread exceeds 16.67 ms, jank occurs in an existing system. According to the embodiments of the present invention, for example, a time sequence-independent task FunC is preprocessed. When UI thread + render thread = 18 ms, if running time of the UI thread is 10 ms, running time of the time sequence-independent task FunC is 3 ms, and running time of the render thread is 8 ms, FunC may be processed in advance by using time after the running time 10 ms of the UI thread. In this case, UI thread + render thread = 15 ms. In this way, an FPS drop does not occur, and a user experiences smooth display without jank.

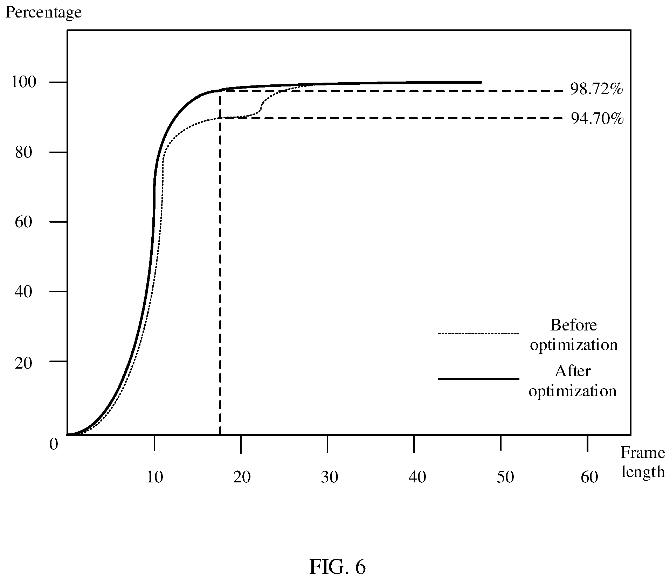

FIG. 6 is a schematic diagram of a smoothness test result according to an embodiment of this application. As shown in FIG. 6, that a user slides in WeChat is used as a test scenario, and it is assumed that a physical speed at which the user slides is 600 millimeters per second (mm/s). The abscissa indicates a frame length in a unit of ms. The abscissa in the dashed line indicates that a time length of one period is 16.67 ms, indicating a time length for running one frame. The ordinate indicates a percentage. Specifically, an operation of sliding in WeChat is used as an example. Running time of layer rendering phases (UI threads and render threads) of a system in 200,000 frames is collected. In a collection procedure, a curve before optimization indicates percentages of the layer rendering phases of the system in the 200,000 frames at different frame lengths. For example, before optimization, it can be ensured that frame lengths of layer rendering phases in 94.70% of the 200,000 frames are within 16.67 ms. After optimization, it can be ensured that frame lengths of layer rendering phases in 98.72% of the 200,000 frames are within 16.67 ms. It is clear that, through optimization according to the method provided in this application, a percentage of frames whose running time is controlled to be within 16.67 ms is increased by approximately four percentage points. Running duration of the system is significantly shortened, so that system smoothness is improved.

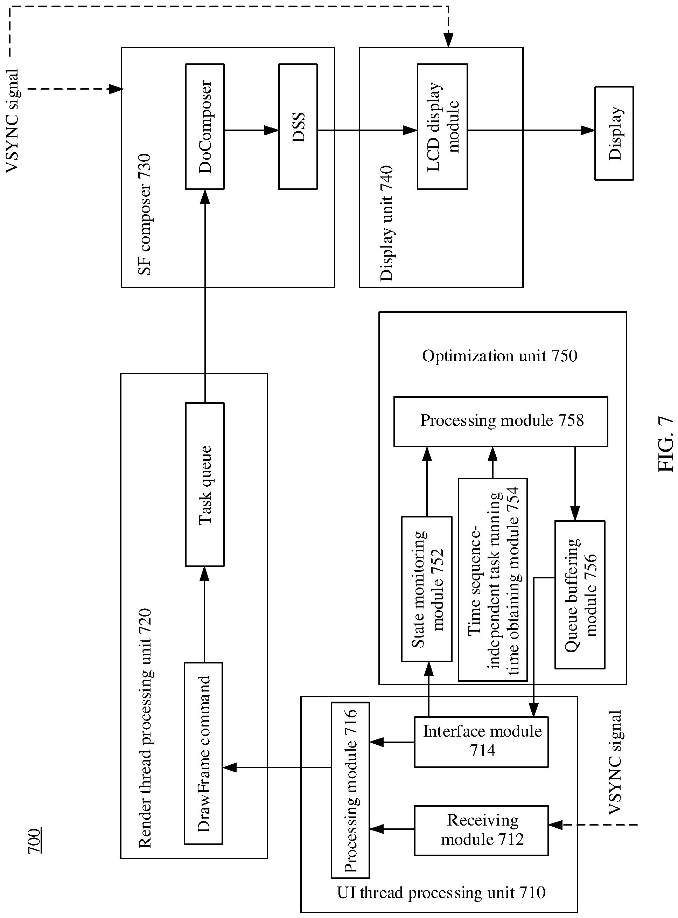

With reference to the foregoing described embodiments and related accompanying drawings, this application provides a data processing apparatus. FIG. 7 is a schematic diagram of a data processing apparatus 700 according to an embodiment of this application. It may be understood that the data processing apparatus 700 may be the foregoing electronic apparatus, or a chip or a component applied to the electronic apparatus. Modules or units in the apparatus 700 are separately configured to perform the actions or the processing procedures described in the foregoing method 300. The apparatus 700 includes corresponding hardware and/or software modules for performing each function. As shown in FIG. 7, the apparatus 700 may include the following parts.

A UI thread processing unit 710 is configured to run a UI thread and process a plurality of processing tasks, for example, a member function Draw, load Layout, and the like, included in the UI thread. The UI thread processing unit 710 may receive a VSYNC signal to trigger the UI thread to start execution. Specifically, the UI thread processing unit 710 may include a receiving module 712, an interface module 714, and a processing module 717. The receiving module 712 is configured to receive a trigger signal and to-be-processed data. The interface module 714 is configured to obtain a preprocessing result of a time sequence-independent task from an optimization unit. The processing module 717 is configured to process a time sequence-dependent task in the to-be-processed data, determine a UI thread processing result based on the obtained preprocessing result of the time sequence-independent task, and send the UI thread processing result to a render thread processing unit 720.

The render thread processing unit 720 receives a DrawFrame command sent by the UI thread processing unit 710, and performs rendering processing on received data. The render thread processing unit 720 includes a task queue (Task Queue), and the DrawFrame command sent from the UI thread is stored in the task queue of the render thread processing unit 720, and waits for processing by the render thread.

An SF composer 730 is configured to compose layers in a previous phase based on a result of a graphic queue buffer of the render thread processing unit 720. The SurfaceFlinger starts to compose the layers. If a previously submitted GPU rendering task is not finished, composition is not performed until the GPU rendering is finished. A composition phase depends on a GPU.

A display unit 740 is configured to display data composed by the SF composer 730. For example, an LCD display module may perform display.

In some embodiments of the present invention, the layer composition phase and the LCD display phase shown in FIG. 1 are not changed. That is, the corresponding render thread processing unit 720, SF composer 730, and display unit 740 are the same as those existing, and details are not described herein again.

An optimization unit 750 is included. In this application, the optimization unit 750 is configured to implement the data processing methods described in FIG. 3 to FIG. 5. The optimization unit 750 may include a UI thread state monitoring module 752, a processing module 758, a time sequence-independent task running time obtaining module 754, and a queue buffering module 756.

The state monitoring module 752 is configured to collect related information of the UI thread.

The time sequence-independent task running time obtaining module 754 is configured to obtain running time of a time sequence-independent task.

The processing module 758 is configured to determine, based on UI thread state information from the UI thread state monitoring module 752 and the obtained running time of the time sequence-independent task, whether to move the time sequence-independent task to idle time of one frame of the UI thread or an idle state of the UI thread. For example, the obtained data is parsed to collect statistics on time consumed by a main thread of a foreground application in a specific time period, a state of the main thread, and time consumed by the time sequence-independent task, so as to determine whether a current frame (for example, a second period) can be used to process the time sequence-independent task. When average running time of the time sequence-independent task is less than or equal to the idle time of one frame, the time sequence-independent task is preprocessed by using the idle time of one frame, that is, the time sequence-independent task in the UI thread is "moved" to the idle time of one frame of the UI thread for processing. Alternatively, the time sequence-independent task is preprocessed by using the idle state, that is, the time sequence-independent task in the UI thread is "moved" to an idle state time period of the UI thread for processing.

The queue buffering module 756 is configured to buffer a processing result of the time sequence-independent task in the UI thread preprocessing procedure, and when the UI thread runs the time sequence-independent task again, directly obtain the result from the queue buffering module 756.

Coordination and cooperation of the modules of the newly added optimization unit 750 can reduce task load of the UI thread in some scenarios, and reduce jank, to improve system smoothness and improve user experience.

An embodiment of the present invention further provides an electronic apparatus or an electronic terminal. In addition to the modules shown in FIG. 7, the electronic apparatus or the electronic terminal may further include a baseband processor, a transceiver, a display, an input/output apparatus, and the like, for example, an external memory interface, an internal memory, a universal serial bus (universal serial bus, USB) interface, a charging management module, a power management module, a battery, an antenna, a mobile communications module, a wireless communications module, an audio module, a speaker, a receiver, a microphone, a headset jack, a sensor module, a button, a motor, an indicator, a camera, a display, and a subscriber identification module (subscriber identification module, SIM) card interface. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in some embodiments of this application does not constitute a specific limitation on the electronic apparatus or the electronic terminal. In some other embodiments of this application, the electronic apparatus or the electronic terminal may include more or fewer components than those shown in the figure or listed above, or some components may be combined, or some components may be split, or the components may be disposed differently. The components shown in the figure may be implemented by hardware, software, or a combination of software and hardware.

It should be further understood that the electronic terminal may be an electronic device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic terminal is not limited in some embodiments of this application.

An embodiment of the present invention further provides an electronic apparatus. The electronic apparatus may be a chip or a circuit, and includes only the UI thread processing unit 710, the optimization unit 750, and the render thread processing unit 720 that are shown in FIG. 7. This is not limited in this application.

It may be understood that, to implement the foregoing functions, the electronic apparatus includes corresponding hardware and/or software modules for performing the functions. With reference to algorithm steps of each example described in the embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to the embodiments, but it should not be considered that the implementation goes beyond the scope of this application.

In the embodiments, the electronic apparatus may be divided into function modules based on the foregoing method examples. For example, each function module corresponding to each function may be obtained through division, or two or more functions may be integrated into one processing module. The integrated module may be implemented in a form of hardware. It should be noted that division into the modules in the embodiments is an example, and is merely logical function division. In an actual implementation, another division manner may be used.

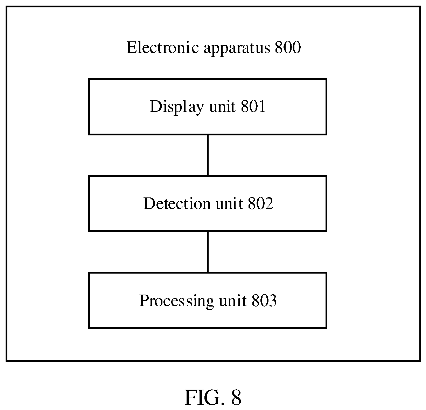

When each function module is obtained through division based on each corresponding function, FIG. 8 is a schematic diagram of possible composition of an electronic apparatus 800 in the foregoing embodiment. As shown in FIG. 8, the electronic apparatus 800 may include a display unit 801, a detection unit 802, and a processing unit 803.

The display unit 801, the detection unit 802, and the processing unit 803 may be configured to support the electronic apparatus 800 in performing the data processing methods and the like described in FIG. 3 to FIG. 5, and/or another procedure of the technology described in this specification.

It should be noted that all related content of the steps in the foregoing method embodiments may be cited in function description of corresponding function modules. Details are not described herein again.

The electronic apparatus provided in some embodiments is configured to perform the data processing method, and therefore, can achieve a same effect as the foregoing implementation method.

When an integrated unit is used, the electronic apparatus may include a processing module, a storage module, and a communications module. The processing module may be configured to control and manage actions of the electronic apparatus, for example, may be configured to support the electronic apparatus in performing the steps performed by the display unit 801, the detection unit 802, and the processing unit 803. The storage module may be configured to support the electronic apparatus to store program code, data, and the like. The communications module may be configured to support communication between the electronic apparatus and another device.

The processing module may be a processor or a controller. The processing module may implement or execute various example logical blocks, modules, and circuits described with reference to content disclosed in this application. Alternatively, the processor may be a combination of processors implementing a computing function, for example, a combination of one or more microprocessors, a combination of a digital signal processor (digital signal processing, DSP) and a microprocessor, or the like. The storage module may be a memory. The communications module may be specifically a device that interacts with another electronic apparatus, such as a radio frequency circuit, a Bluetooth chip, or a Wi-Fi chip.

In an embodiment, when the processing module is a processor and the storage module is a memory, the electronic apparatus in some embodiments may be a device having the structure shown in FIG. 1.

An embodiment further provides a computer storage medium. The computer storage medium stores computer instructions. When the computer instructions are run on an electronic apparatus, the electronic apparatus is enabled to perform the related method steps, to implement the data processing method in the foregoing embodiments.

An embodiment further provides a computer program product. When the computer program product runs on a computer, the computer is enabled to perform the related steps, to implement the data processing method in the foregoing embodiments.

In addition, an embodiment of this application further provides an apparatus. The apparatus may be specifically a chip, a component, or a module. The apparatus may include a processor and a memory that are connected. The memory is configured to store computer executable instructions. When the apparatus runs, the processor may execute the computer executable instructions stored in the memory, so that the chip performs the data processing method in the foregoing method embodiments.

The electronic apparatus, the computer storage medium, the computer program product, or the chip provided in the embodiments is configured to perform a corresponding method provided above. Therefore, for beneficial effects that can be achieved by the electronic apparatus, the computer storage medium, the computer program product, or the chip, refer to beneficial effects of the corresponding method provided above. Details are not described herein again.

Based on the foregoing descriptions of the implementations, a person skilled in the art may understand that for the purpose of convenient and brief descriptions, division into the foregoing function modules is merely used as an example for description. In actual application, the foregoing functions can be allocated to different function modules for implementation based on a requirement. That is, an inner structure of an apparatus is divided into different function modules to implement all or some of the functions described above.

In the several embodiments provided in this application, it should be understood that the disclosed apparatuses and methods may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. Some or all of the units may be selected depending on actual requirements to achieve the objectives of the solutions in the embodiments.

In addition, function units in the embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of the embodiments of this application essentially, or the part contributing to the current technology, or all or some of the technical solutions may be implemented in a form of a software product. The software product is stored in a storage medium and includes several instructions for instructing a device (which may be a singlechip microcomputer, a chip, or the like) or a processor (processor) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method comprises:
starting (304), by a main thread in a first period in response to a received trigger signal, to process a time sequence-dependent task in one or more tasks in the first period;
**characterized in that** the method further comprises:
obtaining (305), by the main thread, a preprocessing result of a time sequence-independent task in the one or more tasks, wherein the preprocessing result is a result obtained by processing (309) the time sequence-independent task in a second period, and the second period is a period before the first period;
determining, by the main thread, a processing result of the main thread based on a result of the time sequence-dependent task processed in the first period and the obtained preprocessing result of the time sequence-independent task; and
sending, by the main thread, the processing result of the main thread to a render thread;
wherein the time sequence-independent task is a task that does not depend on a previous task and whose running result does not affect processing of a subsequent task.

2. The method according to claim 1, wherein before the main thread in the first period starts to process the time sequence-dependent task, the method further comprises:
processing the time sequence-independent task in the second period, to obtain the preprocessing result of the time sequence-independent task; and
buffering the preprocessing result of the time sequence-independent task.

3. The method according to claim 1 or 2, wherein when the main thread in the second period is in a running state, duration of the second period comprises running duration of the main thread and idle duration of the main thread, and the method further comprises:
determining that running duration of the time sequence-independent task is less than or equal to the idle duration of the main thread.

4. The method according to claim 1 or 2, wherein the main thread in the second period is in an idle state.

5. The method according to claim 4, wherein the method further comprises:
determining idle duration of the main thread in a third period, wherein the main thread in the third period is in a running state, duration of the third period comprises running duration of the main thread and the idle duration of the main thread, and the third period is a period before the first period; and
processing the time sequence-independent task in the second period when running duration of the time sequence-independent task is greater than the idle duration of the main thread in the third period, to obtain the preprocessing result of the time sequence-independent task.

6. The method according to any one of claims 1 to 5, wherein the starting, by a main thread in a first period in response to a received trigger signal, to process a time sequence-dependent task in one or more tasks in the first period comprises:
in response to the received trigger signal, stopping a preprocessing procedure of the main thread in the first period, and starting to process the time sequence-dependent task in the one or more tasks in the first period.

7. A data processing apparatus, wherein the apparatus comprises:
a processing unit (710), configured to start a main thread, in a first period in response to a received trigger signal, to process a time sequence-dependent task in one or more tasks in the first period;
**characterized by**:
an obtaining unit, configured to obtain a preprocessing result of a time sequence-independent task in the one or more tasks, wherein the preprocessing result is a result obtained by processing the time sequence-independent task in a second period, and the second period is a period before the first period, wherein
the processing unit is further configured to determine a processing result of the main thread based on a result of the time sequence-dependent task processed in the first period and the obtained preprocessing result of the time sequence-independent task; and
a sending unit, configured to send the processing result of the main thread to a render thread;
wherein the time sequence-independent task is a task that does not depend on a previous task and whose running result does not affect processing of a subsequent task.

8. The apparatus according to claim 7, wherein before the processing unit starts to process the time sequence-dependent task, the processing unit is further configured to:
process the time sequence-independent task in the second period, to obtain the preprocessing result of the time sequence-independent task; and
the apparatus further comprises:
a buffering unit, configured to buffer the preprocessing result of the time sequence-independent task.

9. The apparatus according to claim 7 or 8, wherein when the main thread in the second period is in a running state, duration of the second period comprises running duration of the main thread and idle duration of the main thread, and the processing unit is further configured to:
determine that running duration of the time sequence-independent task is less than or equal to the idle duration of the main thread.

10. The apparatus according to claim 7 or 8, wherein the main thread in the second period is in an idle state.

11. The apparatus according to claim 10, wherein the processing unit is further configured to:
determine idle duration of the main thread in a third period, wherein the main thread in the third period is in a running state, duration of the third period comprises running duration of the main thread and the idle duration of the main thread, and the third period is a period before the first period; and
process the time sequence-independent task in the second period when running duration of the time sequence-independent task is greater than the idle duration of the main thread in the third period, to obtain the preprocessing result of the time sequence-independent task.

12. The apparatus according to any one of claims 7 to 11, wherein the processing unit is specifically configured to:
in response to the received trigger signal, stop a preprocessing procedure in the first period, and start to process the time sequence-dependent task in the one or more tasks in the first period.

13. A computer storage medium, comprising computer instructions, wherein when the computer instructions are run on an electronic apparatus, the electronic apparatus is enabled to perform the data processing method according to any one of claims 1 to 6.

## Patentansprüche

1. Datenverarbeitungsverfahren, wobei das Verfahren Folgendes umfasst:
Starten (304) durch einen Haupt-Thread in einem ersten Zeitraum als Reaktion auf ein empfangenes Auslösesignal, um eine zeitsequenzabhängige Aufgabe in einer oder mehreren Aufgaben in dem ersten Zeitraum zu verarbeiten;
**dadurch gekennzeichnet, dass** das Verfahren ferner Folgendes umfasst:
Erlangen (305) eines Vorverarbeitungsergebnisses einer zeitsequenzunabhängigen Aufgabe in der einen oder den mehreren Aufgaben durch den Haupt-Thread, wobei das Vorverarbeitungsergebnis ein Ergebnis ist, das durch Verarbeiten (309) der zeitsequenzunabhängigen Aufgabe in einem zweiten Zeitraum erlangt wird, und der zweite Zeitraum ein Zeitraum vor dem ersten Zeitraum ist;
Bestimmen eines Verarbeitungsergebnisses des Haupt-Threads durch den Haupt-Thread basierend auf einem Ergebnis der in dem ersten Zeitraum verarbeiteten zeitsequenzabhängigen Aufgabe und dem erlangten Vorverarbeitungsergebnis der zeitsequenzunabhängigen Aufgabe; und
Senden des Verarbeitungsergebnisses des Haupt-Threads durch den Haupt-Thread an einen Render-Thread;
wobei die zeitsequenzunabhängige Aufgabe eine Aufgabe ist, die nicht von einer vorhergehenden Aufgabe abhängt und deren Ausführungsergebnis die Verarbeitung einer nachfolgenden Aufgabe nicht beeinflusst.

2. Verfahren nach Anspruch 1, wobei, bevor der Haupt-Thread in dem ersten Zeitraum die Verarbeitung der zeitsequenzabhängigen Aufgabe startet, das Verfahren ferner Folgendes umfasst:
Verarbeiten der zeitsequenzunabhängigen Aufgabe in dem zweiten Zeitraum, um das Vorverarbeitungsergebnis der zeitsequenzunabhängigen Aufgabe zu erlangen; und
Puffern des Vorverarbeitungsergebnisses der zeitsequenzunabhängigen Aufgabe.

3. Verfahren nach Anspruch 1 oder 2, wobei, wenn sich der Haupt-Thread in dem zweiten Zeitraum in einem Ausführungszustand befindet, die Dauer des zweiten Zeitraums die Ausführungsdauer des Haupt-Threads und die Leerlaufdauer des Haupt-Threads umfasst und das Verfahren ferner Folgendes umfasst:
Bestimmen, dass die Ausführungsdauer der zeitsequenzunabhängigen Aufgabe geringer oder gleich der Leerlaufdauer des Haupt-Threads ist.

4. Verfahren nach Anspruch 1 oder 2, wobei sich der Haupt-Thread in dem zweiten Zeitraum in einem Leerlaufzustand befindet.

5. Verfahren nach Anspruch 4, wobei das Verfahren ferner Folgendes umfasst:
Bestimmen der Leerlaufdauer des Haupt-Threads in einem dritten Zeitraum, wobei sich der Haupt-Thread in dem dritten Zeitraum in einem Ausführungszustand befindet, die Dauer des dritten Zeitraums die Ausführungsdauer des Haupt-Threads und die Leerlaufdauer des Haupt-Threads umfasst und der dritte Zeitraum ein Zeitraum vor dem ersten Zeitraum ist; und
Verarbeiten der zeitsequenzunabhängigen Aufgabe in dem zweiten Zeitraum, wenn die Ausführungsdauer der zeitsequenzunabhängigen Aufgabe größer ist als die Leerlaufdauer des Haupt-Threads in dem dritten Zeitraum, um das Vorverarbeitungsergebnis der zeitsequenzunabhängigen Aufgabe zu erlangen.

6. Verfahren nach einem der Ansprüche 1 bis 5, wobei das Starten durch einen Haupt-Thread in einem ersten Zeitraum als Reaktion auf ein empfangenes Auslösesignal, um eine zeitsequenzabhängige Aufgabe in einer oder mehreren Aufgaben in dem ersten Zeitraum zu verarbeiten, Folgendes umfasst:
als Reaktion auf das empfangene Auslösesignal, Stoppen einer Vorverarbeitungsprozedur des Haupt-Threads in dem ersten Zeitraum und Starten der Verarbeitung der zeitsequenzabhängigen Aufgabe in der einen oder den mehreren Aufgaben in dem ersten Zeitraum.

7. Datenverarbeitungseinrichtung, wobei die Einrichtung Folgendes umfasst:
eine Verarbeitungseinheit (710), die dazu konfiguriert ist, einen Haupt-Thread in einem ersten Zeitraum als Reaktion auf ein empfangenes Auslösesignal zu starten, um eine zeitsequenzabhängige Aufgabe in einer oder mehreren Aufgaben in dem ersten Zeitraum zu verarbeiten;
**gekennzeichnet durch**:
eine Erlangungseinheit, die dazu konfiguriert ist, ein Vorverarbeitungsergebnis einer zeitsequenzunabhängigen Aufgabe in der einen oder den mehreren Aufgaben zu erlangen, wobei das Vorverarbeitungsergebnis ein Ergebnis ist, das durch Verarbeiten der zeitsequenzunabhängigen Aufgabe in einem zweiten Zeitraum erlangt wird, und der zweite Zeitraum ein Zeitraum vor dem ersten Zeitraum ist, wobei
die Verarbeitungseinheit ferner dazu konfiguriert ist, ein Verarbeitungsergebnis des Haupt-Threads basierend auf einem Ergebnis der in dem ersten Zeitraum verarbeiteten zeitsequenzabhängigen Aufgabe und dem erlangten Vorverarbeitungsergebnis der zeitsequenzunabhängigen Aufgabe zu bestimmen; und
eine Sendeeinheit, die dazu konfiguriert ist, das Verarbeitungsergebnis des Haupt-Threads an einen Render-Thread zu senden;
wobei die zeitsequenzunabhängige Aufgabe eine Aufgabe ist, die nicht von einer vorhergehenden Aufgabe abhängt und deren Ausführungsergebnis die Verarbeitung einer nachfolgenden Aufgabe nicht beeinflusst.

8. Einrichtung nach Anspruch 7, wobei, bevor die Verarbeitungseinheit die Verarbeitung der zeitsequenzabhängigen Aufgabe startet, die Verarbeitungseinheit ferner zu Folgendem konfiguriert ist:
Verarbeiten der zeitsequenzunabhängigen Aufgabe in dem zweiten Zeitraum, um das Vorverarbeitungsergebnis der zeitsequenzunabhängigen Aufgabe zu erlangen; und
die Einrichtung ferner Folgendes umfasst:
eine Puffereinheit, die dazu konfiguriert ist, das Vorverarbeitungsergebnis der zeitsequenzunabhängigen Aufgabe zu puffern.

9. Einrichtung nach Anspruch 7 oder 8, wobei, wenn sich der Haupt-Thread in dem zweiten Zeitraum in einem Ausführungszustand befindet, die Dauer des zweiten Zeitraums die Ausführungsdauer des Haupt-Threads und die Leerlaufdauer des Haupt-Threads umfasst und die Verarbeitungseinheit ferner zu Folgendem konfiguriert ist:
Bestimmen, dass die Ausführungsdauer der zeitsequenzunabhängigen Aufgabe geringer oder gleich der Leerlaufdauer des Haupt-Threads ist.

10. Einrichtung nach Anspruch 7 oder 8, wobei sich der Haupt-Thread in dem zweiten Zeitraum in einem Leerlaufzustand befindet.

11. Einrichtung nach Anspruch 10, wobei die Verarbeitungseinheit ferner zu Folgendem konfiguriert ist:
Bestimmen der Leerlaufdauer des Haupt-Threads in einem dritten Zeitraum, wobei sich der Haupt-Thread in dem dritten Zeitraum in einem Ausführungszustand befindet, die Dauer des dritten Zeitraums die Ausführungsdauer des Haupt-Threads und die Leerlaufdauer des Haupt-Threads umfasst und der dritte Zeitraum ein Zeitraum vor dem ersten Zeitraum ist; und
Verarbeiten der zeitsequenzunabhängigen Aufgabe in dem zweiten Zeitraum, wenn die Ausführungsdauer der zeitsequenzunabhängigen Aufgabe größer ist als die Leerlaufdauer des Haupt-Threads in dem dritten Zeitraum, um das Vorverarbeitungsergebnis der zeitsequenzunabhängigen Aufgabe zu erlangen.

12. Einrichtung nach einem der Ansprüche 7 bis 11, wobei die Verarbeitungseinheit spezifisch zu Folgendem konfiguriert ist: als Reaktion auf das empfangene Auslösesignal, Stoppen einer Vorverarbeitungsprozedur in dem ersten Zeitraum und Starten der Verarbeitung der zeitsequenzabhängigen Aufgabe in der einen oder den mehreren Aufgaben in dem ersten Zeitraum.

13. Computerspeichermedium, umfassend Computeranweisungen, wobei, wenn die Computeranweisungen auf einer elektronischen Einrichtung ausgeführt werden, die elektronische Einrichtung in die Lage versetzt wird, das Datenverarbeitungsverfahren nach einem der Ansprüche 1 bis 6 durchzuführen.

## Revendications

1. Procédé de traitement de données, dans lequel le procédé comprend :
le démarrage (304), par un fil d'exécution principal dans une première période, en réponse à un signal de déclenchement reçu, du traitement d'une tâche dépendante de la séquence temporelle dans une ou plusieurs tâches dans la première période ;
**caractérisé en ce que** le procédé comprend en outre :
l'obtention (305), par le fil d'exécution principal, d'un résultat de prétraitement d'une tâche indépendante de la séquence temporelle dans les une ou plusieurs tâches, dans lequel le résultat de prétraitement est un résultat obtenu en traitant (309) la tâche indépendante de la séquence temporelle dans une deuxième période, et la deuxième période est une période antérieure à la première période ;
la détermination, par le fil d'exécution principal, d'un résultat de traitement du fil d'exécution principal sur la base d'un résultat de la tâche dépendante de la séquence temporelle traitée dans la première période et du résultat de prétraitement obtenu de la tâche indépendante de la séquence temporelle ; et
l'envoi, par le fil d'exécution principal, du résultat de traitement du fil d'exécution principal à un fil d'exécution de rendu ;
dans lequel la tâche indépendante de la séquence temporelle est une tâche qui ne dépend pas d'une tâche précédente et dont le résultat d'exécution n'affecte pas le traitement d'une tâche ultérieure.

2. Procédé selon la revendication 1, dans lequel avant que le fil d'exécution principal dans la première période ne démarre le traitement de la tâche dépendante de la séquence temporelle, le procédé comprend en outre :
le traitement de la tâche indépendante de la séquence temporelle dans la deuxième période, pour obtenir le résultat de prétraitement de la tâche indépendante de la séquence temporelle ; et
la mise en mémoire tampon du résultat de prétraitement de la tâche indépendante de la séquence temporelle.

3. Procédé selon la revendication 1 ou 2, dans lequel lorsque le fil d'exécution principal dans la deuxième période est dans un état d'exécution, la durée de la deuxième période comprend la durée d'exécution du fil d'exécution principal et la durée d'inactivité du fil d'exécution principal, et le procédé comprend en outre :
la détermination du fait que la durée d'exécution de la tâche indépendante de la séquence temporelle est inférieure ou égale à la durée d'inactivité du fil d'exécution principal.

4. Procédé selon la revendication 1 ou 2, dans lequel le fil d'exécution principal dans la deuxième période est dans un état inactif.

5. Procédé selon la revendication 4, dans lequel le procédé comprend en outre :
la détermination de la durée d'inactivité du fil d'exécution principal dans une troisième période, dans lequel le fil d'exécution principal dans la troisième période est dans un état d'exécution, la durée de la troisième période comprend la durée d'exécution du fil d'exécution principal et la durée d'inactivité du fil d'exécution principal, et la troisième période est une période précédant la première période ; et
le traitement de la tâche indépendante de la séquence temporelle dans la deuxième période lorsque la durée d'exécution de la tâche indépendante de la séquence temporelle est supérieure à la durée d'inactivité du fil d'exécution principal dans la troisième période, pour obtenir le résultat de prétraitement de la tâche indépendante de la séquence temporelle.

6. Procédé selon l'une quelconque des revendications 1 à 5, dans lequel le démarrage, par un fil d'exécution principal dans une première période en réponse à un signal de déclenchement reçu, du traitement d'une tâche dépendante de la séquence temporelle dans une ou plusieurs tâches dans la première période comprend : en réponse au signal de déclenchement reçu, l'arrêt d'une procédure de prétraitement du fil d'exécution principal dans la première période, et le démarrage du traitement de la tâche dépendante de la séquence temporelle dans les une ou plusieurs tâches dans la première période.

7. Appareil de traitement de données, dans lequel l'appareil comprend :
l'unité de traitement (710), configurée pour démarrer un fil d'exécution principal dans une première période, en réponse à un signal de déclenchement reçu, pour traiter une tâche dépendante de la séquence temporelle dans une ou plusieurs tâches dans la première période ;
**caractérisé par** :
une unité d'obtention, configurée pour obtenir un résultat de prétraitement d'une tâche indépendante de la séquence temporelle dans les une ou plusieurs tâches, dans lequel le résultat de prétraitement est un résultat obtenu en traitant la tâche indépendante de la séquence temporelle dans une deuxième période, et la deuxième période est une période antérieure à la première période, dans lequel
l'unité de traitement est en outre configurée pour déterminer un résultat de traitement du fil d'exécution principal sur la base d'un résultat de la tâche dépendante de la séquence temporelle traitée dans la première période et le résultat de prétraitement obtenu de la tâche indépendante de la séquence temporelle ; et
une unité d'envoi, configurée pour envoyer le résultat de traitement du fil d'exécution principal à un fil d'exécution de rendu ;
dans lequel la tâche indépendante de la séquence temporelle est une tâche qui ne dépend pas d'une tâche précédente et dont le résultat d'exécution n'affecte pas le traitement d'une tâche ultérieure.

8. Appareil selon la revendication 7, dans lequel avant que l'unité de traitement ne démarre le traitement de la tâche dépendante de la séquence temporelle, l'unité de traitement est en outre configurée pour :
traiter la tâche indépendante de la séquence temporelle dans la deuxième période, pour obtenir le résultat de prétraitement de la tâche indépendante de la séquence temporelle ; et
l'appareil comprend en outre :
une unité de mise en mémoire tampon, configurée pour mettre en mémoire tampon le résultat de prétraitement de la tâche indépendante de la séquence temporelle.

9. Appareil selon la revendication 7 ou 8, dans lequel lorsque le fil d'exécution principal dans la deuxième période est dans un état d'exécution, la durée de la deuxième période comprend la durée d'exécution du fil d'exécution principal et la durée d'inactivité du fil d'exécution principal, et l'unité de traitement est en outre configuré pour :
déterminer que la durée d'exécution de la tâche indépendante de la séquence temporelle est inférieure ou égale à la durée d'inactivité du fil d'exécution principal.

10. Appareil selon la revendication 7 ou 8, dans lequel le fil d'exécution principal dans la deuxième période est dans un état inactif.

11. Appareil selon la revendication 10, dans lequel l'unité de traitement est en outre configurée pour :
déterminer la durée d'inactivité du fil d'exécution principal dans une troisième période, dans lequel le fil d'exécution principal dans la troisième période est dans un état d'exécution, la durée de la troisième période comprend la durée d'exécution du fil d'exécution principal et la durée d'inactivité du fil d'exécution principal, et la troisième période est une période précédant la première période ; et
traiter la tâche indépendante de la séquence temporelle dans la deuxième période lorsque la durée d'exécution de la tâche indépendante de la séquence temporelle est supérieure à la durée d'inactivité du fil d'exécution principal dans la troisième période, pour obtenir le résultat de prétraitement de la tâche indépendante de la séquence temporelle.

12. Appareil selon l'une quelconque des revendications 7 à 11, dans lequel l'unité de traitement est spécifiquement configurée pour :
en réponse au signal de déclenchement reçu, arrêter une procédure de prétraitement dans la première période, et démarrer le traitement de la tâche dépendante de la séquence temporelle dans les une ou plusieurs tâches dans la première période.

13. Support de stockage informatique, comprenant des instructions informatiques, dans lequel, lorsque les instructions informatiques sont exécutées sur un appareil électronique, l'appareil électronique est activé pour réaliser le procédé de traitement de données selon l'une quelconque des revendications 1 à 6.
